# EUROPEAN PATENT APPLICATION

(11) **EP 1 580 827 A2**
(43) Date of publication of application: **28.09.2005**
(21) Application number: 05006307.2
(22) Date of filing: 22.03.2005
(51) Int. Cl.: H01M 8/02, H01M 8/10, H01M 8/24

(54) **Solid polymer fuel cell**

(30) Priority: 23.03.2004 JP 2004085448
(71) Applicant: NISSAN MOTOR CO., LTD., Kanagawa-ken (JP)
(72) Inventor: Ohma, Atsushi, Yokohama-shi Kanagawa-ken 232-0061 (JP)
(74) Representative: Grünecker, Kinkeldey, Stockmair & Schwanhäusser Anwaltssozietät

(57) **Abstract**

A solid polymer electrolyte fuel cell is disclosed wherein a first gas diffusion layer, having a fuel electrode formed on an electrolyte membrane at one side thereof, and a second gas diffusion layer, having an oxidizer electrode formed on the electrolyte membrane at the other side thereof, are disposed and gas separators are placed on the first and second gas diffusion layers in opposition to the electrolyte membrane. A fuel gas flow passage, formed with fuel gas flow passages and oxidizer gas flow passages, is disposed between the gas separators and the first and second gas diffusion layers. The gas separators are formed in plate-shapes, respectively, and each has a surface, facing the gas diffusion members, formed with narrow recesses, available for water to transfer, which are provided in as area involving the fuel gas flow passages and the oxidizer gas flow passages and abutting surfaces between the gas flow passage members and the gas separators.

## Description

### BACKGROUND OF THE INVENTION

### 1. Field of the Invention

The present invention relates to a solid polymer fuel cell wherein a first gas diffusion layer, having a fuel electrode formed on an electrolyte membrane at one side thereof, and a second gas diffusion layer, having an oxidizer electrode formed on the electrolyte membrane at the other side thereof, are disposed while separators are placed on the first and second gas diffusion layers in opposition to the electrolyte membrane and a fuel gas flow passage through which fuel gas and oxidizer gas are supplied, respectively, is disposed between the separators and the first and second gas diffusion layers.

### 2. Description of the Related art

With solid polymer fuel cells, there is a problem that reaction product water and condensed water block the gas flow passages.

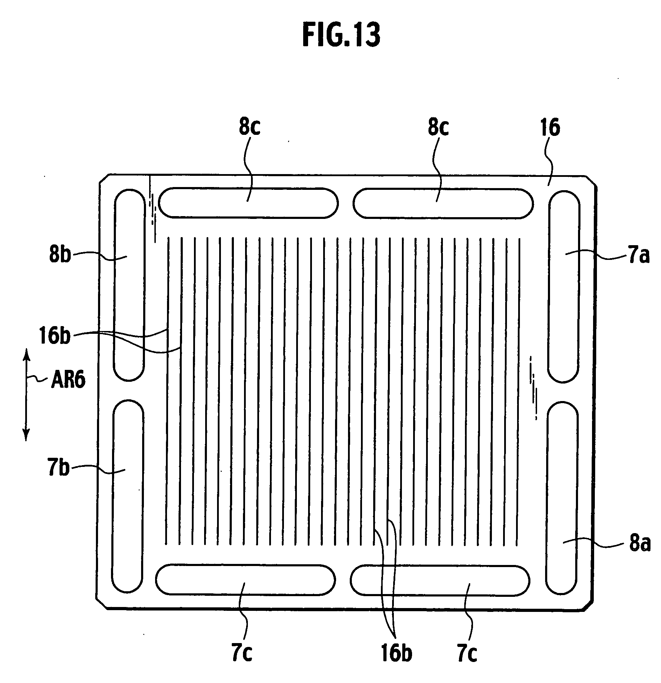

Therefore, for the purpose of permitting water, present in the gas flow passages, to be smoothly discharged, the related art 1 (Publication W098-52242, on page 23, in line 14 to page 24, in line 24 and in FIG 13) discloses a method in which narrow recesses are formed on a bottom of a separator along gas flow passages formed on the separator to allow the narrow recesses to discharge water.

Or, the related art 2 (Japanese Patent Application Laid-Open Publication No. 8-138692 (in paragraph 0032 and in FIGS. 1 and 3) contemplates to allow a gas flow passage surface to be subjected to hydrophilic treatment to improve water discharging capability.

### SUMMARY OF THE INVENTION

With the above-described related art 1, however, water is discharged along a direction in which the gas flow passages are formed and, hence, a direction in which water is discharged (moves) is dependent upon the gas flow passages. Also, with the related art 2, the presence of mere hydrophilic treatment conducted on the surfaces of the gas flow passages causes issues with inadequate water discharging capability.

Therefore, it is an object of the present invention to provide a solid polymer fuel cell with improved water discharging capability.

According to one aspect of the present invention, there is provided a solid polymer fuel cell comprising: a first gas diffusion layer having a fuel electrode formed on an electrolyte membrane at one side thereof; a second gas diffusion layer having an oxidizer electrode formed on the electrolyte membrane at the other side thereof; separators placed on the first and second gas diffusion layers in opposition to the electrolyte membrane; a fuel gas flow passage, through which fuel gas is supplied, and an oxidizer gas flow passage, through which oxidizer gas is supplied, disposed between the separators and the first and second gas diffusion layers; water transfer sections formed on the separators, respectively, for introducing water; and gas flow passage forming members disposed between the separators, equipped with the water transfer sections, and the first and second gas diffusion layers and forming the fuel gas flow passage and the oxidizer gas flow passage; wherein the separators have one surfaces, facing the gas flow passage forming members and the gas flow passage forming members, formed with water transfer sections, respectively..

### BRIEF DESCRIPTION OF THE DRAWINGS

FIG 1 is a cross-sectional view of a solid polymer fuel cell of a first embodiment according to the present invention.
FIG 2 is a cross-sectional view taken on line II-II of FIG. 1.
FIG 3 is a plan view illustrating a structure of the first embodiment wherein a gas flow passage forming member, in contact with a gas diffusion member on an oxidizer gas side, and a gas separator are thermally pressed with resin into a unitary structure.
FIG 4 is a cross-sectional view of a solid polymer fuel cell, corresponding to FIG 2, of a second embodiment according to the present invention.
FIG 5 is a plan view illustrating a structure of the second embodiment wherein a gas flow passage forming member, in contact with a gas diffusion member on an oxidizer gas side, and a gas separator are thermally pressed with resin into a unitary structure.
FIG. 6 is a cross-sectional view of a solid polymer fuel cell, corresponding to FIG 2, of a third embodiment according to the present invention.
FIG. 7 is a plan view illustrating a structure of the third embodiment wherein a gas flow passage forming member, in contact with a gas diffusion member on an oxidizer gas side, and a gas separator are thermally pressed with resin into a unitary structure.
FIG. 8 is a cross-sectional view of a solid polymer fuel cell, corresponding to FIG 2, of a fourth embodiment according to the present invention.
FIG 9 is a plan view of a gas separator member closer to an oxidizer side of a fourth embodiment according to the present invention.
FIG 10 is a cross-sectional view of a solid polymer fuel cell, corresponding to FIG 2, of a fifth embodiment according to the present invention.
FIG 11 is a cross-sectional view of a solid polymer fuel cell, corresponding to FIG 2, of a sixth embodiment according to the present invention.
FIG 12 is a plan view of a membrane electrode assembly as viewed from an oxidizer side in the sixth embodiment.
FIG 13 is a plan view of a surface, on the oxidizer side, of a gas separator in contact with the membrane electrode assembly.

### DETAILED DESCRIPTION OF THE PREFERRED EMBODIMENTS

Hereinafter, various embodiments according to the present invention are described with suitable reference to the accompanying drawings.

### [First Embodiment]

### (Structure)

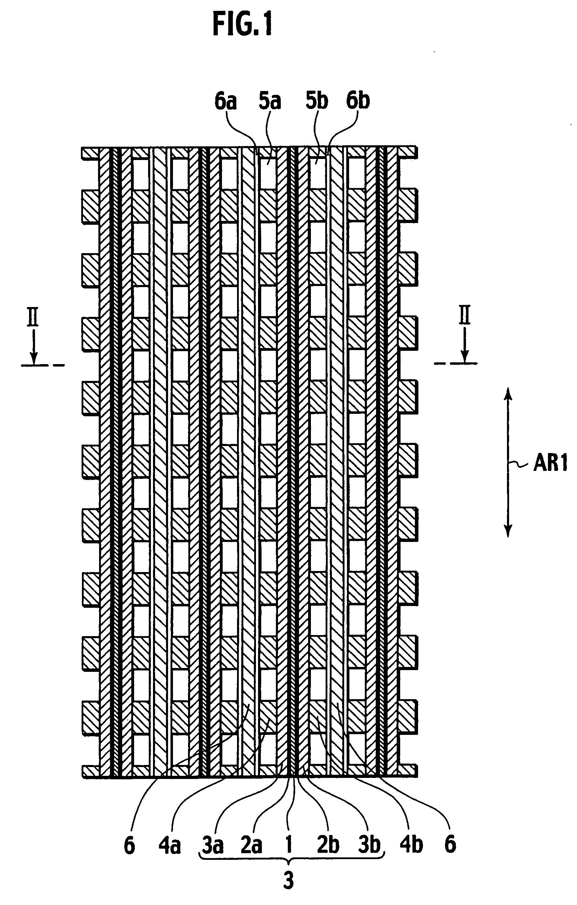

With reference to FIG 1, a membrane electrode assembly 3 includes a polymer membrane 1, a fuel electrode 2a and an oxidizer electrode 2b both of which are formed on the polymer membrane 1 and have surfaces formed with catalyst layers such as platinum, and gas diffusion members 3a (first gas diffusion member) and 3b (second gas diffusion member) that perform as gas diffusion layers. Also, for example, as for the polymer membrane 1, perfuluoro sulfonic acid film is employed.

In order to extract current from the membrane electrode assembly 3 set forth above, fuel gas (gas containing hydrogen as main constituent) and oxidizer gas (air), serving as reaction gases, are supplied to the fuel electrode 2a and the oxidizer electrode 2b. Fuel gas is frequently obtained upon reforming hydrocarbon fuel gas. Although hydrocarbon fuel gas contains hydrogen as a main constituent, it is common for fuel cells of automobiles to be supplied with pure hydrogen (H₂) in recent years.

Referring to FIG 1, gas flow passage forming members 4a, 4b are further located in contact with the both sides of the outermost layer of the membrane electrode assembly 3. Air spaces defined in clearances of the respective gas flow passage forming members 4a, 4b serve as a fuel gas flow channel 5a, through which fuel gas flows, and an oxidizer gas flow channel 5b through which oxidizer gas flows, respectively.

Further, disposed on the respective gas flow passage forming members 4a, 4b are gas separators 6 that serve as separators, respectively. Here, formed on both side surfaces of the respective gas separators 6 are narrow recesses 6a, 6b (water removing means) that extend in a direction as shown by an arrow AR1 in FIG 1. These component parts, that is, the membrane electrode assembly 3, the gas flow passage forming members 4a, 4b and the gas separators 6 form a unit cell.

The gas diffusion members 3a, 3b are made of a carbon paper or a unwoven fabric that are easy to permeate gases and the gas flow passage forming members 4a, 4b and the gas separators 6 are made of carbon plates, respectively. Although the gas separators 6 are required to have a dense property not to permeate gases, materials of the gas flow passage forming members 4a, 4b are not limited to dense materials. The gas diffusion members 3a, 3b, the gas flow passage forming members 4a, 4b and the gas separators 6, 6 are thermally pressed with thermoplastic resin on both of fuel gas and oxidizer gas sides to form a unitary structure.

Placing the unit cells, set forth above, side-by-side into a stacked structure in a repeated manner forms a solid polymer fuel cell as shown in FIG 1. Also, cooling plates may be interposed in given positions, respectively, for cooling the fuel cell depending on needs.

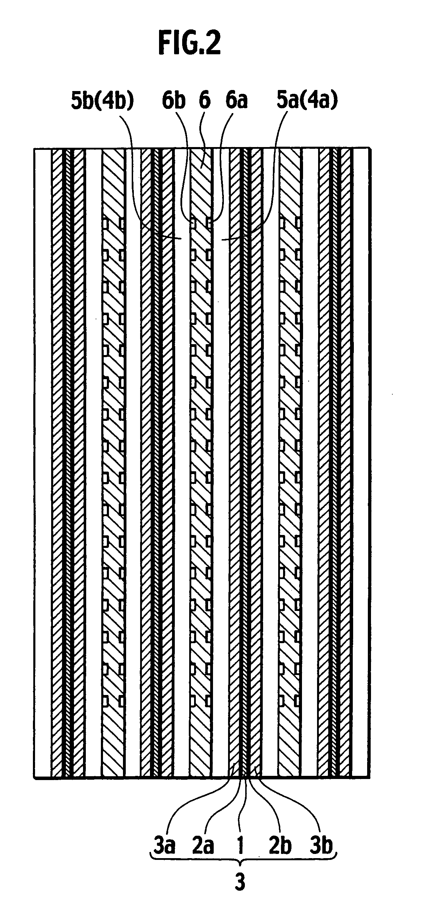

With reference to FIG 2, cross sectional shapes of the narrow recesses 6a, 6b, extending in a direction perpendicular to a paper sheet in FIG 2, which are formed on both surfaces of the gas separator member 6, are indicated in an easily comprehensive manner.

The narrow recesses 6a, 6b of the gas separator member 6 have cross sectional shapes each in a rectangular form and each may preferably have a width and depth falling in a value ranging from approximately 10 µ to 200*µ* m.

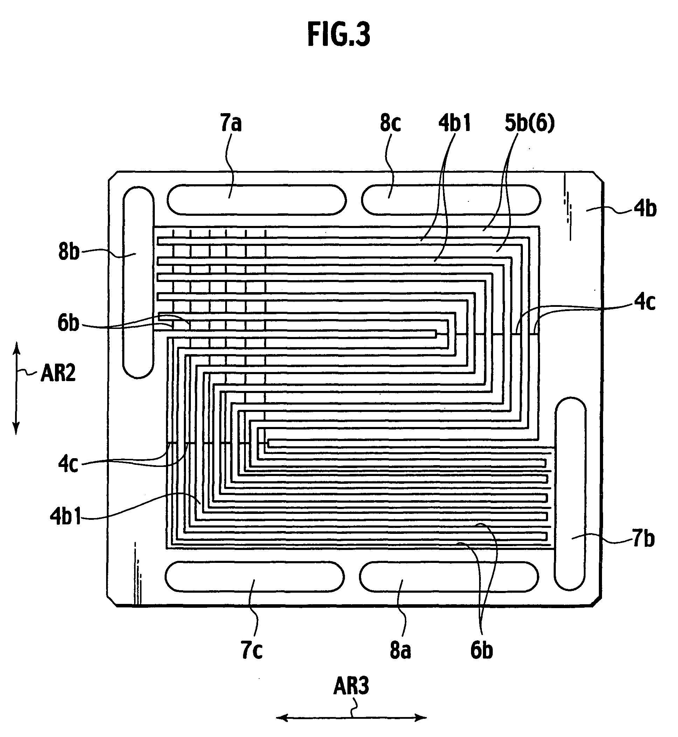

FIG 3 shows a condition under which the gas diffusion member 3b is omitted and the gas flow passage forming member 4b is overlapped on the gas separator 6, and the present fuel cell is used under an up-and-down condition shown in FIG 3.

The gas flow passage forming member 4b includes a plurality of juxtaposed oxidizer gas flow passages 5b, formed in a serpentine pattern, which connect an oxidizer inlet manifold 7b, located in a right and downward area, and an oxidizer outlet manifold 8b, located in a left and upward area as shown in FIG 3. Also, the oxidizer inlet manifold 7b and the oxidizer outlet manifold 8b extend through a whole of the solid fuel cell in a lateral direction as shown in FIG 1.

Further, as shown in FIG. 3, formed in an upper area at a left side thereof is a fuel gas inlet manifold 7a and formed in a lower area at a right side thereof is a fuel gas outlet manifold 8a. Furthermore, formed in a lower area at a left side thereof and the upper area at a right side thereof, respectively, are coolant manifolds 7c and 8c. The manifolds 7a, 8a, 7c, 8c extend through the whole of the solid polymer fuel cell in the lateral direction in FIG. 1 like the oxidizer inlet manifold 7b and the oxidizer outlet manifold 8b.

The gas flow passage forming member 4b includes connecting portions 4c with which rib portions 4b1, each formed between adjacent oxidizer gas flow passages 5b extending in the plural serpentine patterns as set forth above, are mutually connected to one another to prevent the rib portions 4b1 from disruption from one another. Each of the connecting portions 4c may preferably have a wall thickness (a thickness in a direction perpendicular to the paper sheet of FIG 3) smaller than that of the gas flow passage forming member 4b. Moreover, although the presence of a plurality of connecting portions 4c provides excellent shape stability, here in FIG. 3, the connection portions 4c are provided in two areas where the oxidizer gas flow passages 5b extend in an upward and downward direction.

Oxidizer gas, supplied from the oxidizer gas inlet manifold 7b, flows through the oxidizer gas flow passage 5b present between the rib portions 4b1 of the oxidizer gas flow passage forming member 4b from a lower portion to an upper portion and arrives at the oxidizer gas outlet manifold 8b from which oxidizer gas is exhausted outside.

In the meanwhile, the narrow recesses 6b, formed on the gas separator 6, extend in a vertical direction (in a direction as shown by an arrow AR2) in FIG 3, that is, in a direction intersecting the oxidizer gas flow passage 5b at downstream ends of the plural oxidizer gas flow passages 5b in areas close proximity to the oxidizer gas outlet manifold 8b and, in areas below the downstream ends, further extend in the vertical direction along widthwise central areas of vertically extending portions of the oxidizer gas flow passages 5b whereupon the narrow recesses 6b further extend along the widthwise central areas (in a direction as shown by an arrow AR3) of the oxidizer gas flow passages 5b that turn right at 90 degrees in areas (in the vicinity of the coolant water manifold 7c) below the downstream ends of the plural oxidizer gas flow passages 5b to reach to the oxidizer inlet manifold 7b. In other words, overall shapes of the narrow recesses 6b are formed on the gas separator 6 in a substantially L-shaped configuration.

More particularly, the narrow recesses 6b extend in the direction (as shown by the arrow AR1) perpendicular to the plural oxidizer gas flow passage 5b in the vicinity of the oxidizer gas outlet manifold 8b.

Product water or condensed water, present in the oxidizer gas flow passages 5b, are retained in the narrow recesses 6b set forth above. Due to evaporation of water and action of gravity thereof in the vicinity (close proximity to the oxidizer gas inlet manifold 7b) of inlets of the oxidizer gas flow passage 5b, water moves from the areas in the vicinity of the oxidizer gas outlet manifold 8b to areas close proximity to the oxidizer gas inlet manifold 7b.

Also, the gas flow passage forming member 4a, held in contact with the gas diffusion member 3a on a fuel side, and the gas separator 6 have the same serpentine shapes as those of the oxidizer gas flow passages 5b such that the gas flow passages 5a interconnect the upper fuel inlet manifold 7a and the lower fuel outlet manifold 8a. In compliance with such shapes, the narrow recesses 6a are also formed on the gas separator member 6 in the same relationship with as the recesses 6b associated with the oxidizer gas flow passage 6b.

### (Operation)

Product water and condensed water, flowing through the fuel gas flow passages 5a and the oxidizer gas flow passages 5b, respectively, are apt to accumulate in fuel gas and oxidizer gas at areas in the vicinity of the outlets close proximity to the fuel gas outlet manifold 8a and areas in the vicinity of the outlets close proximity to the oxidizer gas outlet manifold 8b. Such water accumulates in the above-described recesses 6a, 6b due to actions of surface tensions and capillary forces (wicking). Then, due to wicking actions and gravitational actions in the same way, water flows through the L-shaped narrow recesses 6a, 6b approximately from an upper region toward a lower region, that is, in a gravitational direction.

Therefore, no product water or condensed water in the fuel gas flow passages 5a and the oxidizer gas flow passages 5b accumulate in one place and water is able to move in a planar direction on the separators 6 with no restriction in gas flow directions, thereby providing improved water discharging capabilities of the fuel gas flow passages 5a and the oxidizer gas flow passages 5b.

Further, the above-described water is apt to accumulate in the oxidizer gas flow passages 5b in the vicinity of the oxidizer inlet manifold 7b and such collected water can be utilized for humidifying reaction gases in the vicinity of the oxidizer gas inlet. Furthermore, due to surface tensions of water resulting from the narrow recesses 6a, 6b, particularly concealed below the gas flow passage forming members 4a, 4b, each of which has a width ranging from approximately 10 *µ*m to 200 *µ*m, water can be retained at all times during normal operations, thereby preventing reactions gases from flowing through the narrow recesses 6a, 6b upon bypassing.

### (Advantageous Effects)

As set forth above, with the first embodiment, water moves on the gas separator 6 in the planar direction with no restriction in the gas flow direction and the presence of a simplified structure wherein the narrow recesses 6a, 6b are formed on the gas separators 6 prevents water from accumulating to improve water discharging capability, while reaction gases can be delivered to the gas flow passages in a uniform distribution pattern, resulting in a capability of obtaining a high-performance solid polymer fuel cell. Also, since water is enabled to move on a surface of the gas separator 6, no need arises for providing a humidifying unit outside the fuel cell, making it possible to form the fuel cell in a compact structure. In addition, the narrow recesses 6a, 6b can be easily formed on the gas separator 6, enabling improvement over water discharging capability at low costs.

Also, the gas flow passage forming members 4a, 4b are made of porous members, respectively, and the narrow recesses 4a, 4b may be formed on only abutting surfaces between the gas flow passage forming members 4a, 4b and the separators 6. In this case, since the gas flow passage forming members 4a, 4b are made of porous materials, water intruded into the narrow recesses 6a, 6b pass across their porous portions onto the surfaces of the gas separators 6 from which water moves in a planar direction.

### [Second Embodiment]

### (Structure)

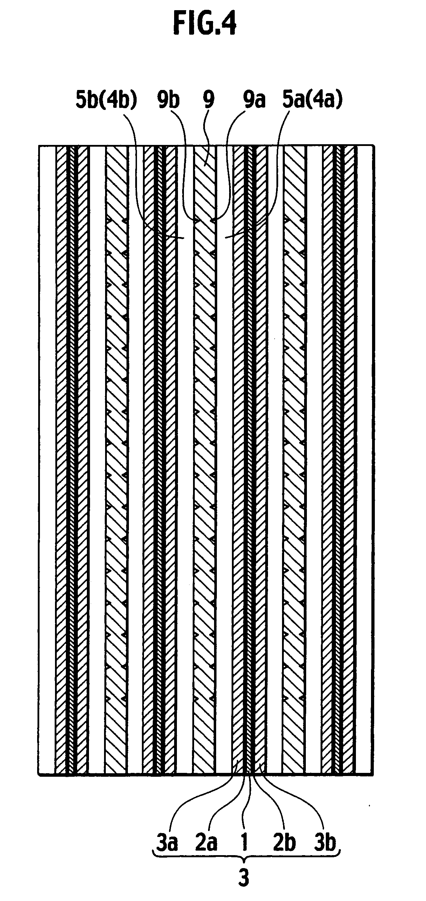

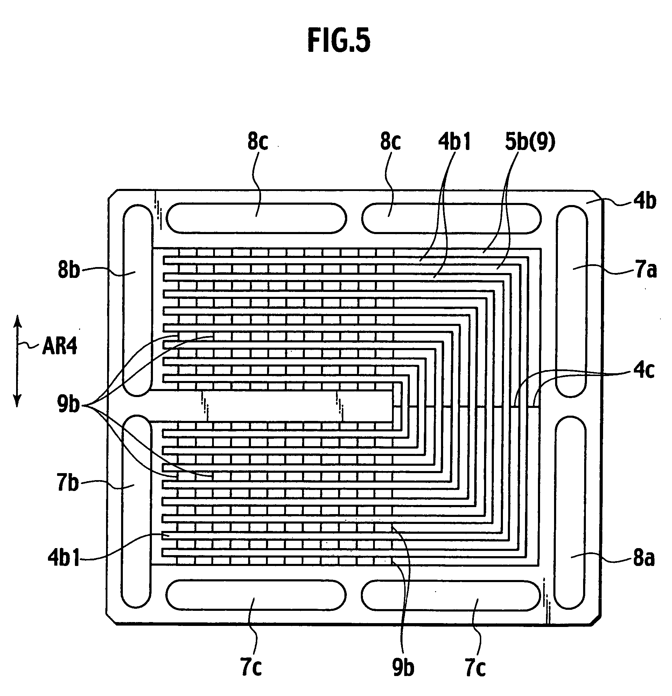

Referring to FIGS. 4 and 5, a second embodiment according to the present invention is described below. A fundamental structure of the second embodiment is identical to that of the first embodiment and differs from the first embodiment in that narrow recesses 9a, 9b of a gas separator 9 have cross-sectional shapes each with a V-shape. Also, the V-shaped narrow recesses 9a, 9b have width and depth ranging from approximately 10*µ*m to 200*µ* m.

FIG 5 shows a condition under which the gas flow passage forming member 4b is overlapped on the gas separator 9 while the gas diffusion member 3b is omitted and the present fuel cell is used in an up-and-down condition shown in FIG 5.

The gas flow passage forming member 4b includes a plurality of oxidizer gas flow passages 5b, formed in a substantially C-shape or substantially U-shape (U-tum shape), through which the oxidizer inlet manifold 7b and the oxidizer outlet manifold 8b communicate.

The gas flow passage forming member 4b includes connecting portions 4c with which rib portions 4b1, each formed between adjacent oxidizer gas flow passages 5b extending in the plural serpentine patterns as set forth above, are mutually connected to one another to prevent the rib portions 4b1 from disruption from one another.

Oxidizer gas, supplied from the oxidizer gas inlet manifold 7b, flows through the oxidizer gas flow passage 5b present between the rib portions 4b1 of the oxidizer gas flow passage forming member 4b from a lower region to an upper region to reach to the oxidizer gas outlet manifold 8b upon which oxidizer gas is exhausted outside.

In the meanwhile, a plurality of narrow recesses 9b are formed on the gas separator 9 such that they extend straight in a vertical direction (in a direction as shown by an arrow AR4) in a way to intersect the oxidizer gas flow passages 5b extending rightward from the oxidizer gas inlet manifold 7b and the oxidizer gas outlet manifold 8b. That is, the narrow recesses 9b extend in a vertical direction under a condition where the present fuel cells are stacked in a side-by-side relationship.

Due to effects in which the narrow recesses 9b capture product water and condensed water present in the oxidizer gas flow passages 5b and captured water is evaporated in areas close proximity to inlets (at areas in the vicinity of the oxidizer gas inlet manifold 7b) of the oxidizer gas flow passages 5b , and due to effects of a gravitation force, water moves through the narrow recesses 9b from a region near the oxidizer gas outlet manifold 8b to another region near the oxidizer gas inlet manifold 7b.

In this case, particularly formed in the close proximity to the oxidizer gas outlet manifold 8b is a coolant outlet manifolds 8c through which coolant, such as coolant water, flows in the stack direction of the fuel cell stack whereby a region near the coolant outlet manifolds 8c is cooled by the action of coolant.

Also, the gas flow passage forming member 4a, held in contact with the fuel side gas diffusion member 3a, and the gas separator 9 of the fuel side, have fuel gas flow passages 5a (not shown in FIG.5) which are formed in substantially the same C-shape configurations, opposite to those in which the oxidizer gas flow passages 5b are formed. The fuel gas passage 5a connects the fuel inlet manifold 7a appearing on a right side at an upper portion (in FIG.5) and the fuel outlet manifold 8a appearing on the right side at a lower portion (in FIG.5). Furthermore, in compliance with such structures of the fuel gas passages 5a, narrow recesses 9a are formed on the gas separator member 9 in a straight configuration on the same relationship as that between the oxidizer gas flow passages 5b and the narrow recesses 9b.

### (Operation)

Product water and condensed water, flowing through the fuel gas flow passages 5a and the oxidizer gas flow passages 5b, respectively, are apt to accumulate in fuel gas and oxidizer gas at areas in the vicinity of the outlets close proximity to the fuel gas outlet manifold 8a and areas in the vicinity of the outlets close proximity to the oxidizer gas outlet manifold 8b. Such water accmulates in the above-described recesses 9a, 9b due to actions of surface tensions and capillary forces (wicking). Then, due to wicking actions and gravitational actions in the same way, water flows through the narrow recesses 9a, 9b substantially from an upper region toward a lower region.

Therefore, no product water or condensed water in the fuel gas flow passages 5a and the oxidizer gas flow passages 5b accumulate in one place and water is able to move on the separator 6 in a planar direction with no restriction in gas flow directions, thereby providing improved water discharging capabilities of the fuel gas flow passages 5a and the oxidizer gas flow passages 5b.

Further, due to gas flows in the oxidizer gas flow passage 5b formed in the substantially C-shaped, the above-described water is enabled to return from outlet vicinities (close proximity to the oxidizer gas outlet manifold 8b) for oxidizer gas to inlet vicinities (close proximity to the oxidizer gas inlet manifold 7b) at which reaction gas can be humidified.

Furthermore, since the coolant water outlet manifold 8c is located in the oxidizer gas outlet vicinities that are cooled by coolant water flowing through the coolant water outlet manifold 8c, steam in gas is apt to condense whereby it is easy to collect water in the narrow recesses 9a, 9b. Also, due to surface tension of water resulting from the narrow recesses 9a, 9b, particularly located below the gas flow passage forming members 4a, 4b, each of which has a width ranging from approximately 10 µm to 200 µm, water can be captured at all times during normal operations, thereby preventing reactions gases from flowing through the narrow recesses 6a, 6b upon bypassing.

### (Advantageous Effects)

As set forth above, with the second embodiment, water moves on the gas separator 9 in the planar direction with no restriction in the gas flow direction and the presence of a simplified structure wherein the narrow recesses 9a, 9b are formed on the gas separator 9 prevents water from accumulating to improve water discharging capability, while reaction gases can be delivered to the gas flow passages in a uniform distribution pattern, resulting in a capability of obtaining a high-performance solid polymer fuel cell. Also, since water is enabled to move on a surface on the gas separator 9, no need arises for providing a humidifying unit outside the fuel cell, making it possible to form the fuel cell in a compact form. In addition, the narrow recesses 9a, 9b can be easily formed on the gas separator 9, enabling improvement over water discharging capability at low costs. Additionally, with the presently filed embodiment, since the areas near the oxidizer gas outlets are forcibly cooled by coolant, a humidifying effect is enhanced and, in addition to this effect, more water can be collected on the surface of the gas separator 9 for reuse.

### [Third Embodiment]

### (Structure)

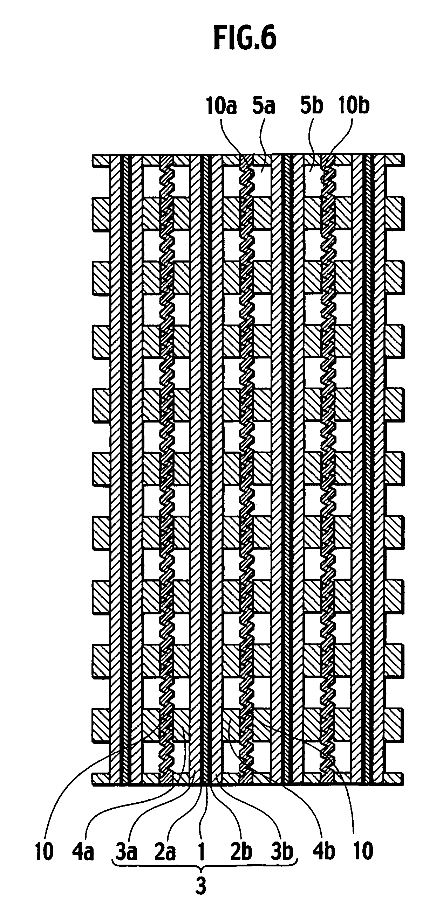

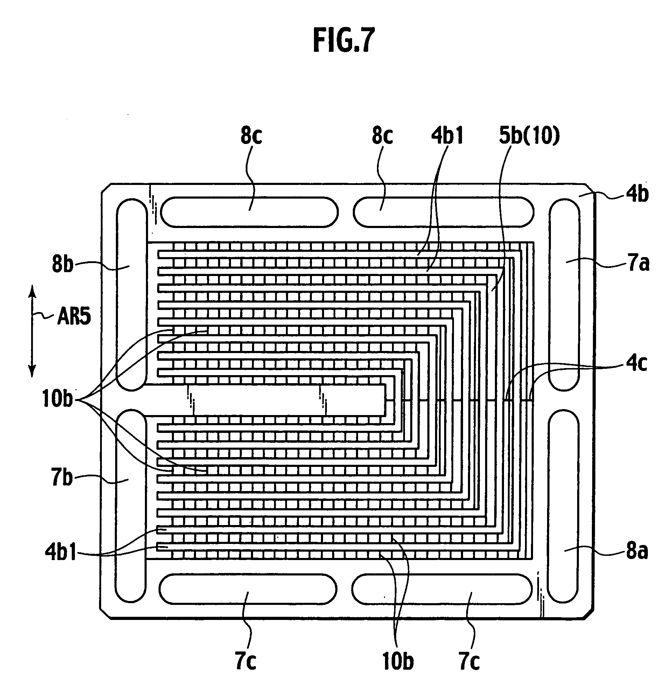

With reference to FIGS. 6 and 7, a third embodiment according to the present invention is described below. A fundamental structure of the second embodiment is identical to that of the second embodiment shown in FIGS. 4 and 5 but differs from the second embodiment in a specification of a gas separator 10.

Here, the gas separator 10 is formed of clad material that is composed of base material, such as stainless steel (SUS31), whose both surfaces are covered with gold upon which pressing work is undertaken to form a corrugated shape in cross section to allow both surfaces to be alternately formed with narrow recesses 10a, 10b configured in a V-shape (W-shape) in cross section. The narrow recesses 10a, 10b have a depth of approximately 50 *µ*m and a plate thickness of the clad material lies at approximately 150*µ* m and a total thickness of the gas separator10 lies at approximately 200 µm. Also, a width and depth of the V-shaped narrow recesses (V-shaped recesses) 10a, 10b may preferably fall in a value approximately ranging from 10*µ*m to 200 µm.

FIG 7 shows a condition under which the gas flow passage forming member 4b is overlapped on a gas separator 10 while the gas diffusion member 3b is omitted and the present fuel cell is used in an up-and-down condition shown in FIG. 7.

The gas flow passage forming member 4b includes a plurality of oxidizer gas flow passages 5b, formed in a substantially C-shape configuration like in the second embodiment shown in FIG 5, through which the oxidizer inlet manifold 7b, located in a left side at a lower portion thereof In FIG. 7, and the oxidizer outlet manifold 8b, located in the left side at an upper portion thereof in FIG 7, communicate.

In the meanwhile, since the narrow recesses 10b formed on the gas separator 10 takes the form of the corrugated shape formed over an entire area of the gas separator member 10, the plural narrow recesses 10b are formed straight so as to extend in a vertical direction (in a direction as shown by an arrow AR5) in FIG 7. Here, the narrow recesses 10b intersect the oxidizer gas flow passages 5b, at areas that extend in a lateral direction (a direction perpendicular to the arrow AR5) in FIG 7, and extend parallel to the oxidizer gas flow passages 5b at areas that extend in a vertical direction in FIG 7.

Other structures of the third embodiment are similar to those of the second embodiment.

### (Operation)

Even with the third embodiment, product water and condensed water, present in the oxidizer gas flow passages 5b, are captured in the narrow recesses 10b and, due to evaporation of water and action of gravitational force of water in a region near the inlets of the oxidizer gas flow passages 5b, product water and condensed water moves through the narrow recesses 10b from the region near the outlets of the oxidizer gas flow passages 5b to the region near the inlets thereof. Also, since the coolant water outlet manifold 8c is formed in the vicinity of the oxidizer gas outlets and gas is cooled by coolant water flowing through the coolant water outlet manifold 8c, steam contained in gas is apt to condense to make it easy for the narrow recesses 10b to collect water.

Further, since the gas separator 10 is made of stainless steel that is subjected to pressing work and able to have a reduced thickness for thereby enabling reduction in a pitch between adjacent unit cells that are mutually stacked, thereby achieving the formation of a whole of a fuel cell in a compact configuration. Also, even if the gas separator 10 is made thin, the gas separator 10 employs metallic clad material and, so, it becomes possible to avoid the issues, such as cracking, resulting from increased strength, enabling contribution to improvement in strength.

### [Fourth Embodiment]

### (Structure)

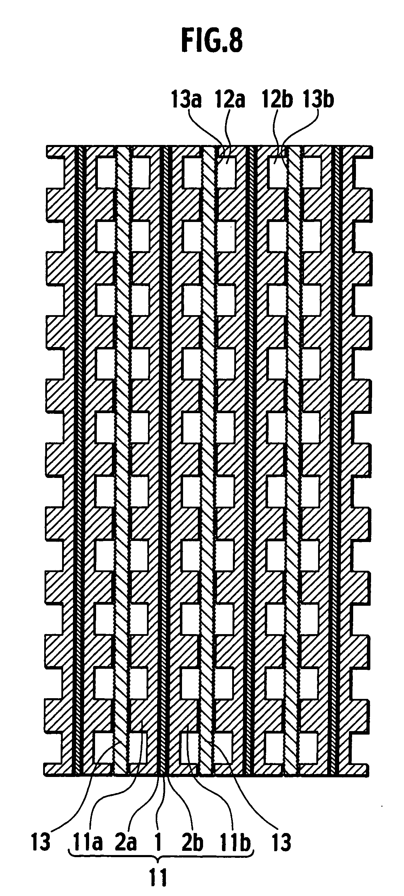

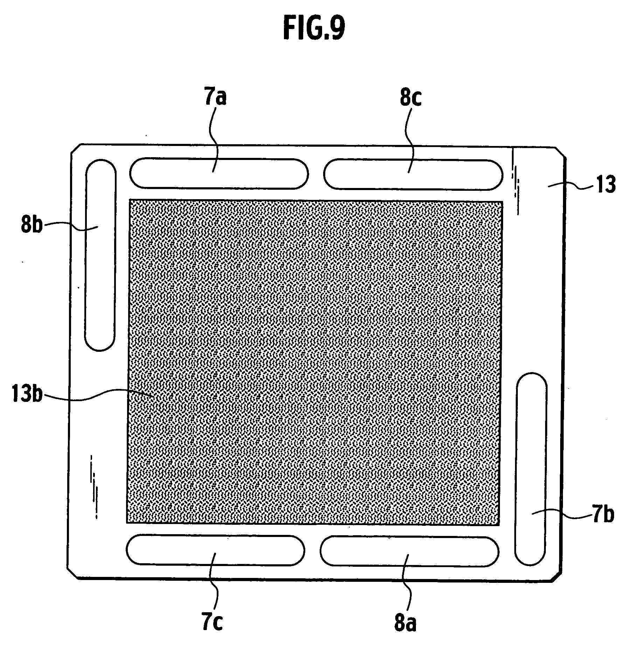

A fourth embodiment according to the present invention is described below with reference to FIGS. 8 and 9. Referring to FIG 8, there is shown a membrane electrode assembly 11 that includes a polymer membrane 1 whose both surfaces are covered with a fuel electrode 2a and an oxidizer electrode 2b, each formed with a catalyst layer, and gas diffusion flow passage forming members 11a, 11b, placed on the catalyst layers, respectively, in each of which a gas diffusion member, serving as a gas diffusion layer, and a gas flow passage forming member.

The gas diffusion flow passage members 12a, 12b are formed with air gaps that serve as fuel gas flow passages 12a and the oxidizer gas flow passages 12b, respectively. Also, placed on the gas diffusion flow passage members 12a, 12b, respectively, are gas separator members 13 whose both surfaces are roughened to form water transfer section. These component parts, that is, the polymer membrane 1, the membrane electrode assembly 11, the gas diffusion flow passage forming members 11a, 11b and the gas separators 13 are stacked into a unit cell.

The gas diffusion flow passage forming members 11a, 11b are formed of unitary sheets of gas permeable carbon paper, respectively, and surfaces of the unitary carbon papers are cut out to form in given flow channel shapes to form the gas diffusion flow passage members 12a, 12b, respectively. Further, the carbon paper preferably have a surface roughness of Ra = 25. Moreover, the gas separates 13 are made of a dense carbon plate that preferably have a surface roughness of Ra = 100 and roughened surface areas are treated as convexo-concave portions 13a, 13b.

The gas diffusion flow passage forming members 11a, 11b and the gas separators 13 have their peripheries thermally pressed with thermoplastic resin to form a unitized structure. When this takes place, the gas diffusion flow passage forming members 11a, 11b and the gas separators 13 are formed with the roughened surfaces and, hence, given clearances are formed between adjacent contact surfaces. Therefore, product water or condensed water retained in recessed portions on the respective roughened surfaces is dispersed in entire areas of the surfaces.

Plural unit cells, set forth above, are repeatedly placed in a stack structure, thereby forming a solid polymer fuel cell as shown in FIG. 8. Also, cooling plates may be interposed in given positions of the fuel cell to cool the same depending on needs.

As shown in FIG 9, although the gas separator 13 has the surface, in contact with the gas diffusion flow passage forming member 11b, which is roughened to lie at a value of Ra = 100 as set forth above, the surface roughness Ra may preferably lies in a value of approximately 50 to 200.

### (Operation)

Fuel gas and oxidizer gas flowing through the fuel gas flow passages 12a and the oxidizer gas flow passages 12a of the gas diffusion flow passage forming members 11a, 11b, respectively, are susceptible to product water and condensed water that accumulate at outlets of the respective gas flow passages and due to actions of surface tension and a capillary force (wicking), such water tends to collect on areas that are surface roughened condensed.

Due to wicking action and action of gravitational force, product water and condensed water disperses and spreads in a planar direction on the gas separator 13. Therefore, no product water or condensed water in the fuel gas flow passages 12a and the oxidizer gas flow passages 12b accumulate in one place and water is able to transfer in the planar direction on the separator 13 with no restriction in gas flow directions, thereby providing improved water discharging capabilities of the fuel gas flow passages 12a and the oxidizer gas flow passages 12b.

Further, since the convexo-concave portions 13a, 13b of the gas separator 13, subjected to surface roughening work, lie at a value of Ra = 50 to 200, water is captured due to surface tension during normal operations. Therefore, it becomes possible to prevent reaction gases from passing across the convexo-concave portions 13a, 13b upon bypassing. Additionally, due to the presence of the gas diffusion flow passage forming members 11a, 11b in each of which the gas diffusion member and the gas flow passage forming member are unitized, the number of component parts to be used are reduced, thereby improving a stack ability of the unit cells.

### [Fifth Embodiment]

### (Structure)

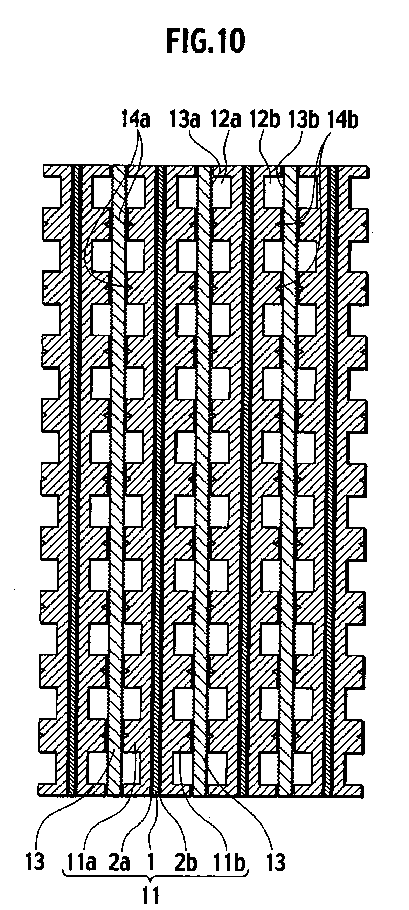

Referring to FIG 10, a fifth embodiment according to the present invention is described below. The fifth embodiment takes the substantially same structure as that of the fourth embodiment set forth above but differs from the fourth embodiment in that the gas diffusion flow passage forming members 11a, 11b have convex surfaces, in contact with the gas separators 13, which are additionally formed with narrow recesses 14a, 14b serving as second water transfer section. The narrow recesses 14a, 14b is formed in a V-shaped in cross-section, taken on line intersecting a direction (a direction perpendicular to the paper sheet of FIG 10) in which the narrow recesses 14a, 14b extend and their depth lie at a value of 30 *µ*m. Other structures are identical to those of the fourth embodiment shown in FIGS. 8 and 9.

### (Operation)

In addition to the operation of the fourth embodiment, since the surfaces of the convex portions of the gas diffusion flow passage forming members 11a, 11b are formed with the narrow recesses 14a, 14b, respectively, the surfaces of the gas separators 13 have increased dispersion capability (moving property) of product water and condensed water in a planar direction, enabling alleviation in variation of gas distribution flow resulting from adverse affects of product water and condensed water. Also, permeation (evaporation) of water to the gas diffusion flow passage forming members 11a, 11b is promoted to the extent provided by the narrow recesses 14a, 14b, increasing humidification effect on reaction gases.

### [Sixth Embodiment]

### (Structure)

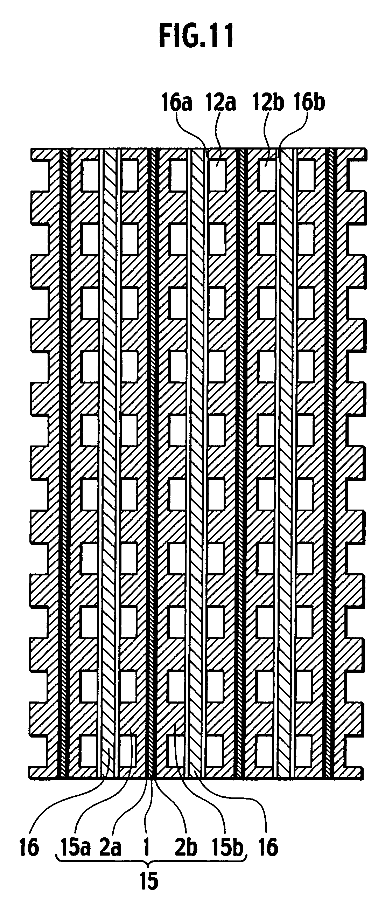

Referring to FIG 11, a sixth embodiment according to the present invention is described below. With the sixth embodiment, a membrane electrode assembly 11 is provided that includes a polymer membrane 1, whose both surfaces are covered with a fuel electrode 2a and an oxidizer electrode 2b, each formed with a catalyst layer, and gas diffusion flow passage forming members 15a, 15b, placed on the catalyst layers, respectively, in each of which a gas diffusion member, serving as a gas diffusion layer, and a gas flow passage forming member.

Further, placed on the gas diffusion flow passage forming members 15a, 15b, respectively, are gas separators 16 whose both surfaces are formed with narrow recesses (water transfer sections) 16a, 16b, respectively. These component parts, that is, the membrane electrode assembly 15 and the gas separators 16 form a unit cell.

The gas diffusion flow passage forming members 15a, 15b are made of sheets of gas permeable carbon paper, respectively, and surfaces of unitary carbon papers are cut out in a given flow channel shape to form the fuel gas flow passages 12a and oxidizer gas flow passages 12b.

The gas separator 16 is made of metallic material composed of a sheet of stainless steel (SUS310) whose both surfaces are covered with a Ti-coating layer upon which gold plating is carried out. The narrow recesses 16a, 16b are not shown here but is formed in a V-shaped in cross section as shown in FIG 4.

The gas diffusion flow passage forming members 15a, 15b and the gas separator 16 have outer peripheries that are thermally pressed with thermoplastic resin to form a unitary structure.

The unit cells, set forth above, are repeatedly stacked side-by-side to form a stack structure, thereby forming a solid polymer fuel cell as shown in FIG 11. Also, cooling plates may be interposed in given positions of the fuel cell depending on needs.

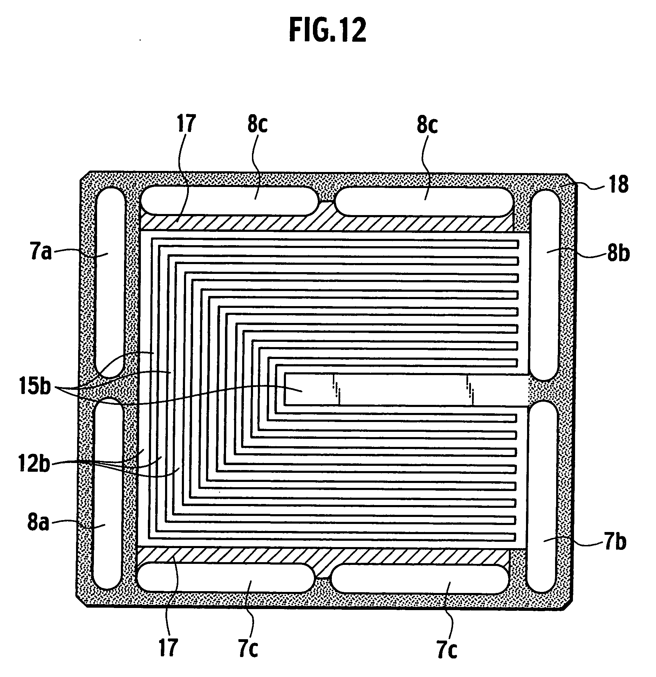

Referring to FIG 12, the gas diffusion flow passage forming member 15b is composed of the gas diffusion member and the gas flow passage forming member, which are unitized, and has a surface, facing the gas separator 16, which are formed in a convexo-concave configuration to form oxidizer gas flow passages 12b.

In FIG 12, two though-holes formed on left side are fuel gas inlet manifold 7a and a fuel gas outlet manifold 8a and two though-holes formed on right side are oxidizer inlet manifold 7b and oxidizer outlet manifold 8b. Also, in FIG 12, two through-holes formed on upper and lower areas, respectively are coolant water manifolds 7c, 8c through which coolant water flows.

The gas diffusion flow passage forming member 15b is formed with a plurality of oxidizer gas flow passages 12b, extending parallel to one another, which are formed in a substantially C-shape (U-shape) configuration so as to provide communication between the above-described oxidizer gas inlet and the respective manifolds 7b, 8b.

In the presently filed embodiment, the coolant water manifold 8c, closer to the oxidizer outlet manifold 8b, corresponds to a coolant water inlet of the solid polymer fuel cell and, thus, coolant water is lower in temperature than the other coolant water manifold 7c corresponding to the coolant outlet.

Further, since peripheral portions 17, 18 of forming regions of the oxidizer gas flow passage 12b in the gas diffusion flow passage forming member 15b are internally impregnated with impregnation material (porous gas flow passage forming member). With the presently filed embodiment, areas (hatched areas) 17, inside the coolant water manifold 7c, 8c, are impregnated with carbon powder and the other areas 18 are impregnated with silicone rubber. The areas 17 impregnated with carbon powder are formed with voids with an average diameter of 1 µm and the other areas 18 impregnated with silicone rubber , has voids with an average diameter in the order of sub micron size to provide a sealing effect.

As shown in FIG 13, respective manifolds are formed in positions corresponding to the respective manifolds described in FIG 12.

Further, a plurality of narrow recesses 16b is formed on the surface of the gas separator 16 in a way to extend in a vertical direction (a direction as shown by an arrow AR6). Each narrow recess 16b has a depth and width in the order of 80 *µ*m. The narrow recesses 16b are present in an area inside the respective impregnated portions 17, 18, in FIG 12, in the region in which the oxidizer gas flow passages 12b are formed.

When operating the solid polymer fuel cell with such a structure, a pressure of coolant water is maintained to be lower than a reaction gas pressure.

### (Operation)

Fuel gas and oxidizer gas flowing through the fuel gas flow passages 12a and the oxidizer gas flow passages 12a of the gas diffusion flow passage forming members 11a, 11b, respectively, are apt to accumulate at areas close proximity to the outlets of the respective gas flow passages near the fuel gas outlet manifold 8a and areas close proximity to the outlets of the respective gas flow passages near the oxidizer gas outlet manifold 8a. In this moment, due to actions of surface tension and a capillary force (wicking), product water and condensed water collect in the narrow recesses 16a, 16b disposed on the gas separator 16. Then, due to actions of wicking and gravitational force in the same way, water substantially flows from an upper region to a lower region and spreads on the gas separator 16 in a planar direction. Particularly, product water and condensed water transfer to areas in the vicinity of the oxidizer gas inlet manifold 7b.

Therefore, no product water and condensed water, prevailing in the gas flow passages 12a and the oxidizer gas flow passages 12b, accumulate in one place and no gas flow direction is restricted to enable water to transfer on the gas separators 16 in a planar direction, thereby improving water discharging capabilities of the gas flow passages 12a and the oxidizer gas flow passages 12b.

Further, water is captured in the narrow recesses 16a, 16b due to surface tension, protecting gas from passing across and bypassing the narrow recesses 16a, 16b. Furthermore, since the region near the oxidizer gas outlet manifold 8b takes the form of a structure that is easy to be cooled by the coolant water manifold 8c serving as cooling means, the condensation is enhanced to promote water moving action on the surface of the gas separator 16.

Moreover, the gas diffusion member and the gas flow passage forming member are unitized to form the gas diffusion flow passage forming members 15a, 15b with the resultant decrease in the number of component parts, improving a stacking ability of the unit cells. Also, since the gas separator 16 employs metal, the unit cell can be made thin. In addition, the boundary vicinities (at sections 17), near the coolant water manifolds 7c, 8c, of the gas diffusion flow passage forming members 15a, 15b are impregnated with carbon powder to provide an increased average pore diameter, in contrast to the surrounding section 18 impregnated with silicone rubber, while maintaining a coolant water pressure to be lower than a reaction gas pressure. By so doing, the boundary vicinities serve as second water transfer section that allow product water and condensed water, present in the gas diffusion flow passage forming members 15a, 15b, to pass across the insides of the sections 17, impregnated with carbon powder, to move in a planar direction for thereby collecting water in the coolant water manifolds 7c, 8c, respectively, resulting in a further increase in water moving ability in an electric power-generating area.

As set forth above, with the above-described sixth embodiment, due to a simple structure wherein water moves in the planar direction with no restriction in the gas flow direction and the narrow recesses 16a, 16b are formed on the surface of the gas separator 16, the accumulation of water is prevented to provide improved water discharging capability while equalizing the flow distribution of reaction gases to the gas flow passages, making it possible to obtain a high-performance solid polymer fuel cell. Moreover, since water is enabled to move on the surface of the gas separator 16, no external humidifying unit is needed, making it possible to form the fuel cell in a compact configuration.

As will be understood from the foregoing, according to the present invention, the gas flow passages, closer to the gas separator formed with the above-described recesses, take the form of a structure wherein reaction gases, flowing through these gas flow passages, are supplied from the lower region in a vertical direction to be discharged from the upper region and wherein the recesses are formed in a wide area between the above-described gas supply side and gas discharge side. Thus, produce water, which is apt to accumulate in the surface of the gas separator at areas close proximity to the outlets of the gas flow passages, is enabled to return to areas in the vicinity of the reaction gas flow passage inlets via the recesses. Also, water, moving through the recesses, is subjected to action resulting from gravitational force to promote the water movement and, hence, water is suppressed from accumulating at the gas outlet vicinities. In addition to this effect, water, moved to the gas inlet vicinities, is enabled to humidify gases and no external humidifying unit is needed, thereby achieving simplification of a fuel cell.

At least one gas flow passages of the fuel gas and oxidizer gas flow passages take the form of a structure wherein the gas inlet side and the gas outlet side are connected to one another through at least one gas flow passage formed in the substantially C-shaped (U-shaped) and the above-described recesses are formed to cover the wide area between the gas inlet vicinities and the gas outlet vicinities. Thus, the gas inlet and the gas outlet can be formed closer to one another, making it easy for water to move on the separator surface from the gas outlet vicinities to the gas inlet vicinities.

Due to the provision of the cooling means for cooling the outlet vicinities of the gas flow passages, product water in reaction gases can be effectively condensed and more water is enabled to move on the separator surface in the planar direction.

The provision of the recesses, each is formed in a V-shaped in cross section taken in a direction intersecting a direction in which water moves, makes it easy for water to be captured in the recesses due to surface tension with the resultant increase in capillary attraction (wicking) to cause water to easily move along the recesses.

Due to the provision of the above-described gas flow passage forming member united with the above-described gas diffusion layer, the number of components parts are decreased to a lower value than that of a structure in which those component parts are composed of separate members and assembling performance can be improved while enabling the minimization in contact resistance between adjacent component parts, thereby enabling improvement in electric power-generating performance.

Since the recesses are formed on the above-described gas separator in an area that extends from the above-described gas flow passages to the other gas flow passages, adjacent to the above-described gas flow passages, via the abutting surface associated with the above-described gas flow passage forming member, the water transfer is possible among the adjacent gas flow passages and the amount of water to be captured can be equalized throughout a whole of the adjacent gas flow passages.

Since the recesses, available to move water, are formed on the abutting surface, facing the above-described separator, of the gas flow passage forming member, the water movement on the separator surface is further enhanced, enabling the formation of a solid polymer fuel cell with high water management performance.

Further, for example, according to the Third embodiment of the present invention, the solid polymer fuel cell includes, inter alia, a corrugated shaped separator. In this configuration, no need arises for the separator to have a wall thickness section in contrast to a structure wherein a plate-like separator is formed with gas flow passages, resulting in the thin formation to form a fuel cell in a compact configuration.

Additionally, according to the Fourth and Fifth embodiments of the present invention, the solid polymer fuel cell includes, inter alia, a plate-like separator formed with a convexo-concave section. In this configuration, due to the convexo-concave section, surface tension of water on the separator surface is enhanced, whereby water is easy to spread on the separator surface and easily moves on the separator in a planar direction.

Since the convexo-concave section is formed of a roughened surface formed on the separator, the presence of surface tension of water caused by surface roughness on the separator surface makes it easy for water to spread on the separator surface to allow water to move on the separator in the planar direction.

Further, according to the Sixth embodiment of the present invention, a solid polymer fuel cell includes, inter alia, a porous gas flow passage forming member for forming the gas flow passages. In this configuration, even in cases where the recesses are formed on only the abutting surface associated with the gas flow passage forming member, since the gas flow passage forming member is made of porous material, whereby water, intruded into the recesses, passes across the porous portions to move on the separator surface in the planar direction.

The entire content of Japanese Patent Application No. P2004-085448 with a filing data of March 23, 2004 is herein incorporated by reference.

Although the present invention has been described above by reference to certain embodiments of the invention, the invention is not limited to the embodiments described above and modifications will occur to those skilled in the art, in light of the teachings. The scope of the invention is defined with reference to the following claims.

## Claims

1. A solid polymer fuel cell comprising:
a first gas diffusion layer (3a, 11a, 15a) having a fuel electrode (2a) formed on an electrolyte membrane (1) at one side thereof;
a second gas diffusion layer (3b, 11b, 15b) having an oxidizer electrode (2b) formed on the electrolyte membrane (1) at the other side thereof;
separators (6, 6, 10, 10, 13, 13, 16, 16) placed on the first and second gas diffusion layers (3a, 3b, 11a, 11b, 15a, 15b) in opposition to the electrolyte membrane;
a fuel gas flow passage (5 a, 12a), through which fuel gas is supplied, and an oxidizer gas flow passage (5b, 12b), through which oxidizer gas is supplied, disposed between the separators and the first and second gas diffusion layers;
water transfer sections (6a, 6b, 9a, 9b, 13a, 13b, 16a, 16b) formed on the separators, respectively, for introducing water; and;
gas flow passage forming members (4a, 4b, 11a, 11b, 15a, 15b) disposed between the separators, equipped with the water transfer sections, and the first and second gas diffusion layers and forming the fuel gas flow passage and the oxidizer gas flow passage;
wherein the separators have one surfaces, facing the gas flow passage forming members (4a, 4b) and the gas flow passage forming members, formed with water transfer sections, respectively.

2. First Embodiment). The solid polymer fuel cell according to claim 1, wherein
the separators are formed in plate-like shapes, respectively; and
the water transfer sections take the form of the recesses (6a, 6b) formed on the surfaces, closer to surfaces of the gas diffusion layers (3a, 3b), of the separators (6, 6).

3. The solid polymer fuel cell according to claim 2, wherein
at least one of the fuel gas flow passage (5a) and the oxidizer gas flow passage (5b) takes a structure wherein flowing gas is supplied from a lower region in a vertical direction and discharged from an upper region; and
the recesses (6a, 6b) are located in areas between gas supply sides and gas exhaust sides.

4. The solid polymer fuel cell according to any one of claims 1 to 3, wherein
at least one of the fuel gas flow passage (5a) and the oxidizer gas flow passage (5b) takes a structure that interconnects a gas inlet side and a gas outlet side in a C-shape configuration; and
the water transfer sections (6a, 6b) are located between a vicinity of the gas inlet side and a vicinity of the gas outlet side.

5. The solid polymer fuel cell according to any one of claims 1 to 4, further comprising:
cooling means for cooling outlet vicinities of the gas flow passages.

6. The solid polymer fuel cell according to any one of claims 1 to 5, wherein
the water transfer sections is formed in a V-shaped in cross section taken on line intersecting a direction in which water moves.

7. The solid polymer fuel cell according to any one of claims 1 to 6, wherein
the gas flow passage forming members take unitized structures with the gas diffusion layers, respectively.

8. The solid polymer fuel cell according to any one of claims 1 to 7, wherein
the water transfer sections of the separators are formed so as to extend from the gas flow passage to another gas flow passage adjacent to the gas flow passage via abutting surfaces in abutment with the gas flow passage forming members.

9. The solid polymer fuel cell according to claim 1, wherein
the separators are formed in plate-like shapes, respectively; and
the water transfer sections take the form of the recesses (9a, b) which is formed in a V-shaped in cross-section and formed on the surfaces, closer to surfaces of the gas diffusion layers (3a, 3b), of the separators (9, 9).

10. The solid polymer fuel cell according to claim 1, wherein
the separators (10) are formed in W-shaped configurations in cross section, each composed of a plurality of consecutive V-shape recesses (10a, 10b); and
the water transfer sections are formed of the V-shape recesses (10a, 10b) on the surface, closer to the gas diffusion layer, of the separator (10).

11. The solid polymer fuel cell according to claim 1, wherein
the separators (13) are formed in plate-shapes; and
the water transfer sections are formed of convexo-concave portions (13a, 13b) formed on surfaces, facing the gas flow passage forming members, of the separators.

12. The solid polymer fuel cell according to claim 11, wherein
the convexo-concave portions are formed by roughening a surface of the separator (13).

13. The solid polymer fuel cell according to claim 12, wherein
the gas diffusion flow passage forming members (11a, 11b) have convex portions, in
contact with the separators (13), which are formed with narrow recesses (14a, 14b) that serve as second water transfer section.

14. The solid polymer fuel cell according to claim 1, wherein
the separators (16) are formed in plate-shapes;
the water transfer sections have recesses (16a, 16b) formed on surfaces, facing the gas diffusion layers, of the plate-shape separators;
the gas flow passage forming members (15a, 15b) include gas flow passage forming members (17, 18); and
the recesses (16a, 16a) of the separators (16) are formed on at least abutting surfaces in abutment with the gas flow passage forming member (15a, 15b).
